# EUROPEAN PATENT APPLICATION

(11) **EP 3 799 455 A1**
(43) Date of publication of application: **31.03.2021**
(21) Application number: 19806595.5
(22) Date of filing: 21.05.2019
(51) Int. Cl.: H04W 8/08

(54) **ROAMING METHOD, ACCESS POINT, AND ACCESS POINT COLLABORATIVE WORK CONTROLLER**

(30) Priority: 21.05.2018 CN 201810490662
(71) Applicant: ZTE Corporation, Shenzhen, Guangdong 518057 (CN)
(72) Inventor: CHEN, Daowei, Shenzhen, Guangdong 518057 (CN); DONG, Weijie, Shenzhen, Guangdong 518057 (CN); WANG, Xinyu, Shenzhen, Guangdong 518057 (CN); LU, Bo, Shenzhen, Guangdong 518057 (CN)
(74) Representative: Studio Torta S.p.A.
(86) International application number: PCT/CN2019/087766
(87) International publication number: WO 2019/223679

(57) **Abstract**

Disclosed are a roaming method, an access point (AP), and an AP collaborative work controller. The method comprises: configuring, by an AP collaborative work controller, roaming notification information when an STA associated with a first AP needs to roam from the first AP to a second AP, the roaming notification information carrying indication information indicating that the STA associated with the first AP roams from the first AP to the second AP, and the first AP and the second AP both being APs associated by the AP collaborative work controller; and sending, by the AP collaborative work controller, the roaming notification information to the first AP, such that the first AP sends STA association information corresponding to the STA to the second AP according to the indication information. In the solution, an STA does not need to re-execute an association process and a key negotiation process during a handover, such that the STA is not even aware that a roaming-caused handover has occurred. In addition, since the association process and the key negotiation process do not need to be re-executed, the time required by a roaming-caused handover is shortened, thereby improving user experience.

## Description

### Cross-reference to Related Applications

This application claims the priority of Chinese patent application No. 201810490662.X filed on May 21, 2018, the entirety of which is incorporated herein by reference.

### Field of the Invention

The present application relates to the field of wireless communications, for example, to a roaming method, an access point, and an access point collaborative work controller.

### Background of the Invention

With the increase in the number of WiFi (Wireless Fidelity) personal terminals such as smartphones and notebooks, access points (APs) networking is increasingly used in homes to achieve full coverage of home WiFi. Users' online games, online voice and video calls, and other services have put forward higher requirements for fast roaming between multiple APs in homes. At present, a main roaming method is a method of automatic roaming of a wireless station (STA). During this roaming process, an STA needs to disconnect from a previously associated AP first, and then perform an association procedure with a new AP. This kind of roaming method has the problems of excessively long roaming time and service interruption. In addition, for 802.11k/r (IEEE standard) roaming, the problem of longer roaming time also exists, and STAs need to support the 802.11k/r protocol. Moreover, the problem of long roaming time can be alleviated by using a pre-association roaming method, but this requires STAs to support specific protocols. Therefore, the defects of the above roaming methods will degrade user experience during a roaming process.

### Summary of the Invention

The present application provides a roaming method, an access point, and an access point collaborative work controller, which can provide a fast and convenient roaming method.

The present application provides a roaming method comprising steps of:
configuring, by an access point AP collaborative work controller, roaming notification information when a wireless station STA associated with a first AP needs to roam from the first AP to a second AP, the roaming notification information carrying indication information indicating that the STA associated with the first AP roams from the first AP to the second AP, and the first AP and the second AP both being APs associated by the AP collaborative work controller; and
sending, by the AP collaborative work controller, the roaming notification information to the first AP, such that the first AP sends STA association information corresponding to the STA to the second AP according to the indication information.

The present application further provides a roaming method comprising steps of:
receiving roaming notification information sent by an access point AP collaborative work controller, the roaming notification information carrying indication information indicating that an STA roams from a current AP to a second AP;
sending STA association information corresponding to the STA to the second AP according to the indication information that is carried in the roaming notification information and that indicates that the STA roams from the current AP to the second AP;
receiving roaming confirmation information sent by the second AP, the roaming confirmation information being response information of the STA association information; and
sending, after receiving the roaming confirmation information sent by the second AP, a roaming notification message to the STA, the roaming notification message being used for notifying the STA to switch a work channel to a work channel corresponding to the second AP.

The present application further provides an access point AP collaborative work controller, comprising a memory, a processor, and a computer program stored on the memory and capable of running on the processor, wherein the computer program, when executed by the processor, implements a processing of any of the roaming methods provided in the present application.

The present application further provides an access point AP, comprising a memory, a processor, and a computer program stored on the memory and capable of running on the processor, wherein the computer program, when executed by the processor, implements a processing of any of the roaming methods provided in the present application.

The present application further provides a computer-readable storage medium storing thereon a computer program that when executed by a processor implements a processing of any of the roaming methods provided in the present application.

### Brief Description of the Drawings

The following describes drawings in embodiments of the present disclosure. The drawings in the embodiments are used for further understanding of this application, are used together with the description to explain this application, and do not limit the protection scope of this application.
Figs. 1A and 1B are flowcharts of roaming methods provided by embodiments of the present disclosure;
Fig. 2 is a flowchart of a roaming method provided by an embodiment of the present disclosure;
Figs. 3A, 3B, and 3C are flowcharts of roaming methods provided by embodiments of the present disclosure;
Fig. 4 is a flowchart of a roaming method provided by an embodiment of the present disclosure; and
Fig. 5 is a flowchart of a roaming method provided by an embodiment of the present disclosure.

### Detailed Description of the Embodiments

In order to facilitate the understanding of those skilled in the art, the present application is further described below in conjunction with accompanying drawings, which cannot be used to limit the protection scope of this application. It should be noted that embodiments in this application and various methods in the embodiments can be combined with each other if there is no conflict.

The present application proposes a roaming method, which comprises step 10 to step 40.

In step 10, an access point (AP) collaborative work controller establishes an association relationship with APs.

In step 20, the AP collaborative work controller determines whether an STA associated with a first AP needs to roam from the first AP to a second AP.

The AP collaborative work controller may determine whether to perform STA roaming, according to strength information carried in STA signal information sent by APs, and may also determine whether to perform STA roaming, according to other information, for example, according to load conditions of APs.

In step 30, the AP collaborative work controller configures roaming notification information when the STA associated with the first AP needs to roam from the first AP to the second AP, the roaming notification information carrying indication information indicating that the STA associated with the first AP roams from the first AP to the second AP, and the first AP and the second AP both being APs associated by the AP collaborative work controller.

In step 40, the AP collaborative work controller sends the roaming notification information to the first AP, such that the first AP sends STA association information corresponding to the STA to the second AP according to the indication information.

Compared with related technologies, the technical solution provided in this application comprises: receiving, by an AP collaborative work controller, a configuration information request message sent by an AP; configuring, by the AP collaborative work controller, a BSSID and a work channel corresponding to the AP, wherein the AP collaborative work controller configures all APs that have accessed the AP collaborative work controller to have an identical BSSID and non-overlapping work channels; and sending, by the AP collaborative work controller, configuration information to the AP, the configuration information carrying a BSSID and a work channel corresponding to the AP. In the solution of the present application, an STA does not need to re-execute an association process and a key negotiation process during a handover, such that the STA is not even aware that a roaming-caused handover has occurred. In addition, since the association process and the key negotiation process do not need to be re-executed, the time required by a roaming-caused handover is shortened, thereby improving user experience.

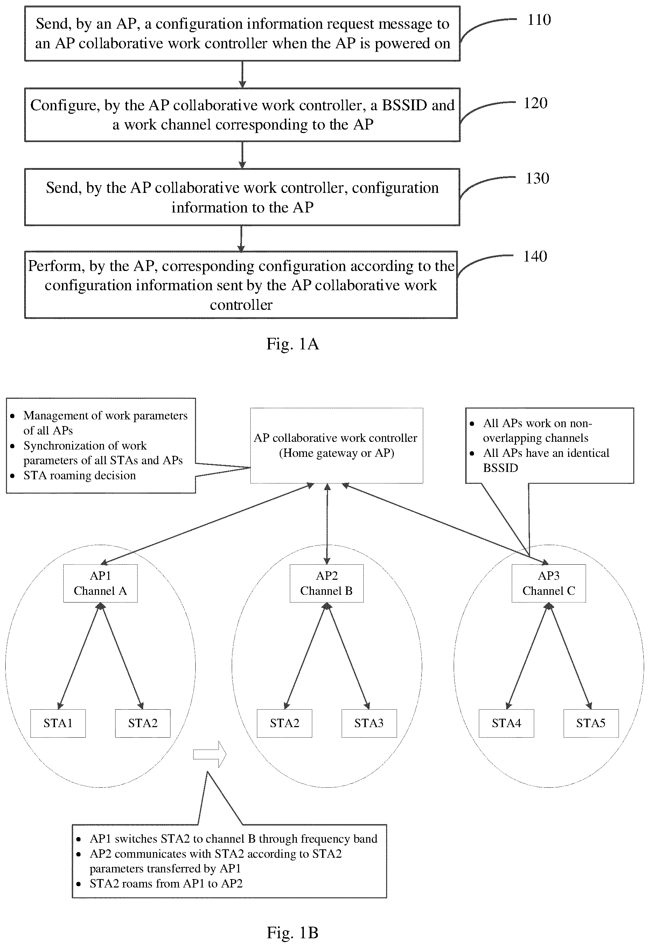

With reference to Fig. 1A, in the method provided by the present application, the step 10 comprises step 110 to step 140.

In step 110, when an AP is powered on, the AP sends a configuration information request message to an AP collaborative work controller.

In step 120, after receiving the configuration information request message sent by the AP, the AP collaborative work controller configures a BSSID (medium access control (MAC) address or basic service set identifier of a wireless AP or STA) and a work channel corresponding to the AP, wherein the AP collaborative work controller configures all APs that have accessed the AP collaborative work controller to have an identical basic service set identifier (BSSID) and non-overlapping work channels.

In the embodiment of the present disclosure, APs that have accessed the same AP collaborative work controller are configured to have an identical BSSID. However, in the related technologies, APs are configured to have different BSSIDs, and during a handover performed by an STA, it is necessary to re-execute an association process and a key negotiation process due to a change in BSSID. In the embodiment of the present disclosure, different APs are configured to have an identical BSSID, and thus during a handover performed by an STA, since only a work channel has changed without a change in BSSID, STA roaming actually involves only channel switching without re-executing an association process and a key negotiation process, such that the STA is not even aware that a handover has occurred between APs.

In step 130, the AP collaborative work controller sends configuration information to the AP, the configuration information carrying the BSSID and the work channel corresponding to the AP.

The configuration information includes at least one of SSID name, encryption manner and key, and work channel.

In step 140, the AP performs corresponding configuration according to the configuration information sent by the AP collaborative work controller.

Fig. 1B is a schematic diagram of a multi-AP home networking. As shown in Fig. 1B, in the multi-AP home networking, all APs have an identical BSSID and work in non-overlapping channels. Thus, although the APs have the identical BSSID, the work channels of the APs do not overlap and the APs will not interfere with each other. Work parameters of the multiple APs are uniformly managed by an AP collaborative work controller. In addition, the AP collaborative work controller also realizes synchronization of work parameters of all STAs and APs in the home networking and realizes an STA roaming decision. Either a home gateway or one of the APs may serve as the AP collaborative work controller.

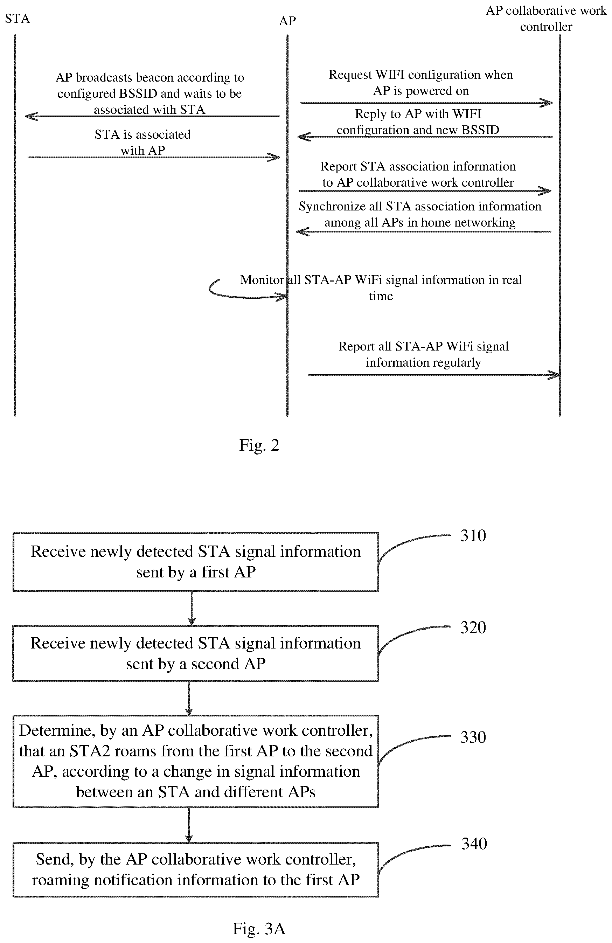

Home gateway is taken as an example herein. When an AP is powered on, it requests, from an AP collaborative work controller, WiFi work parameters including BSSID, SSID name, encryption manner and key, work channel, etc. (the AP may communicate with the AP collaborative work controller via an automatic communication protocol, such as the ZTE panoramic network protocol and the China Telecom elink protocol); and the AP having this BSSID broadcasts a beacon frame over a corresponding channel, and waits for an STA association request. The AP will report, to the AP collaborative work controller, STA association information including negotiated WiFi key information, STA MAC address, etc. The AP collaborative work controller will synchronize such information among other APs, which collaboratively work with the AP. All APs working in collaboration will report, to the AP collaborative work controller, "STA-AP" WiFi signal information associated with the respective APs. Such information will be used as the basis for the AP collaborative work controller to determine whether the STA performs a roaming-caused handover, and the AP collaborative work controller may also determine whether the STA performs a roaming-caused handover, in conjunction with WiFi signal information and other related parameters, as shown in Fig. 2.

The present application proposes a roaming method, which comprises step 210 to step 280.

In step 210, an STA is associated with a first AP.

The step 210 comprises step 211 and step 212.

In step 211, a first AP broadcasts a beacon according to a configured BSSID and work channel, and waits to be associated with an STA.

In step 212, the STA is associated with the first AP.

In step 220, after the STA works normally, a location of the STA changes.

In step 230, an AP collaborative work controller determines, according to a change in signal information between the STA and different APs, that an STA2 roams from the first AP to a second AP.

In step 231, after detecting that STA signal information has changed, the first AP sends newly detected STA signal information to the AP collaborative work controller.

The signal information may be signal strength.

In step 232, after detecting that STA signal information has changed, the second AP sends newly detected STA signal information to the AP collaborative work controller.

There is no specific sequence between step 230 and step 240.

In step 233, the AP collaborative work controller makes a determination according to signal information between the STA and different APs, and determines that the STA2 needs to roam from the first AP to the second AP.

In step 234, the AP collaborative work controller sends roaming notification information to the first AP, the roaming notification information carrying indication information indicating that the STA2 roams from the first AP to the second AP.

In step 240, after receiving the roaming notification information sent by the AP collaborative work controller, the first AP sends STA association information to the second AP to request, according to the STA association information, that the STA2 roam to the second AP.

In step 250, after receiving the STA association information sent by the first AP, the second AP sends roaming confirmation information to the first AP.

In step 260, after receiving the roaming confirmation information sent by the second AP, the first AP sends a roaming notification message to the STA2 to notify the STA2 to switch a work channel to a work channel corresponding to the second AP.

In step 270, after the STA2 switches a work channel, the second AP sends roaming success response information to the STA2.

In step 280, after receiving the response information sent by the second AP, the STA2 successfully roams to the second AP.

With reference to Fig. 3A, the present application proposes a roaming method, which comprises step 310 to step 340.9

In step 310, an AP collaborative work controller receives newly detected STA signal information sent by a first AP.

In step 320, the AP collaborative work controller receives newly detected STA signal information sent by a second AP.

In step 330, the AP collaborative work controller determines, according to a change in signal information between an STA and different APs, that an STA2 roams from the first AP to the second AP.

In step 340, the AP collaborative work controller sends roaming notification information to the first AP.

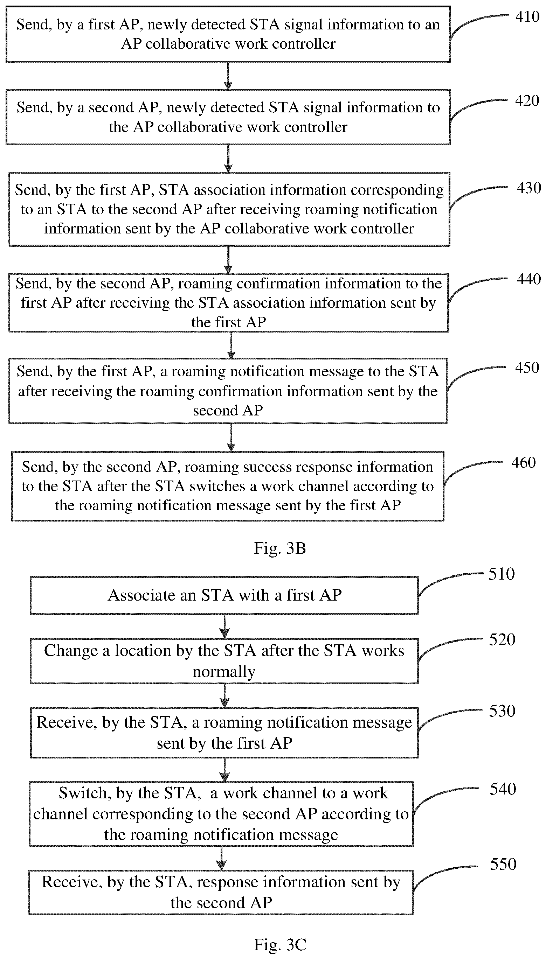

With reference to Fig. 3B, the present application proposes a roaming method, which comprises step 410 to step 460.

In step 410, after detecting that STA signal information has changed, a first AP sends newly detected STA signal information to an AP collaborative work controller.

In step 420, after detecting that STA signal information has changed, a second AP sends newly detected STA signal information to the AP collaborative work controller.

In step 430, after receiving roaming notification information sent by the AP collaborative work controller, the first AP sends STA association information corresponding to an STA to the second AP according to indication information carried in the roaming notification information, the indication information indicating that the STA roams from the first AP to the second AP.

In step 440, after receiving the STA association information sent by the first AP, the second AP sends roaming confirmation information to the first AP.

In step 450, after receiving the roaming confirmation information sent by the second AP, the first AP sends a roaming notification message to the STA, the roaming notification message being used for notifying the STA to switch a work channel to a work channel corresponding to the second AP.

In step 460, after the STA switches a work channel according to the roaming notification message sent by the first AP, the second AP sends roaming success response information to the STA.

After receiving the response information sent by the second AP, the STA successfully roams to the second AP.

With reference to Fig. 3C, the present application proposes a roaming method, which comprises step 510 to step 550.

In step 510, an STA is associated with a first AP.

In step 520, after the STA works normally, a location of the STA changes.

In step 530, the STA receives a roaming notification message sent by the first AP, the roaming notification message notifying the STA to switch a work channel to a work channel corresponding to a second AP.

In step 540, the STA switches a work channel to the work channel corresponding to the second AP according to the work channel that is corresponding to the second AP and that is carried in the roaming notification message.

In step 550, after switching a work channel to the work channel corresponding to the second AP, the STA receives response information sent by the second AP.

To this end, the STA successfully roams to the second AP.

The present disclosure will be illustrated below in conjunction with an application implementation scenario.

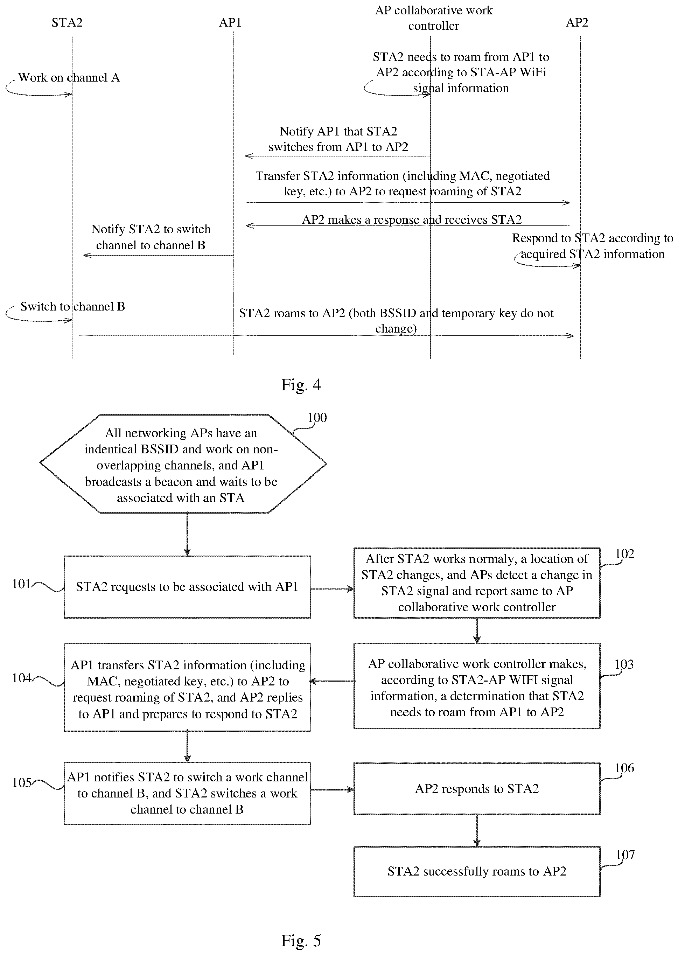

As shown in Fig. 4, STA2 is associated with AP1 and works on channel A. During movement of STA2, an AP collaborative work controller compares STA-AP signal information and determines that STA2 needs to roam from AP1 to AP2. The AP collaborative work controller notifies AP1 of switching STA2 from AP1 to AP2; AP1 transfers STA2 information (including MAC, negotiated key, etc.) to AP2 to request roaming of STA2; AP2 replies to roaming of STA2 requested by AP1, and responds to STA2 according to the acquired STA2 information; AP1 notifies STA2 to switch a channel to channel B (a channel on which AP2 works); and STA2 switches a work channel to channel B. In this case, AP2 has acquired a temporary key negotiated between STA2 and AP1, the temporary key being directly used for the subsequent message encryption and decryption between AP2 and STA2. Due to the correspondence between STA2 and BSSID, the temporary key has not changed, and STA2 is not even aware that a roaming-caused handover has occurred. During the roaming-caused handover, a re-association process and a key negotiation process are omitted, thereby significantly shortening the time required by a roaming-caused handover.

The present disclosure will be illustrated below with reference to another application example.

The present application provides a fast roaming method in a multi-AP home networking, the method being applied to a home network comprising multiple APs and home gateways. As shown in Fig. 5, the method mainly comprises step 100 to step 107.

In step 100, all networking APs have an identical BSSID and work on non-overlapping channels, and AP1 broadcasts a beacon and waits to be associated with an STA.

In step 101, STA2 requests to be associated with AP1.

In step 102, after STA2 works normally, a location of STA2 changes, and the APs detect a change in STA2 signal and report the same to an AP collaborative work controller.

In step 103, the AP collaborative work controller determines, according to STA2-AP WiFi signal information, that STA2 needs to roam from AP1 to AP2.

In step 104, AP1 transfers STA2 information (including MAC, negotiated key, etc.) to AP2 (via an encrypted link) to request roaming of STA2, and AP2 replies to AP1 and prepares to respond to STA2.

In step 105, AP1 notifies STA2 to switch a work channel to channel B, and STA2 switches a work channel to channel B.

In step 106, AP2 responds to STA2.

In step 107, STA2 successfully roams to AP2.

Based on the same or similar concept as that of the foregoing embodiments, an embodiment of the present disclosure further provides an access point (AP) collaborative work controller. The AP collaborative work controller proposed in the present application comprises a roaming message configuration unit and a roaming message notification unit.

The roaming message configuration unit is configured to configure roaming notification information when an STA associated with a first AP needs to roam from the first AP to a second AP, the roaming notification information carrying indication information indicating that the STA associated with the first AP roams from the first AP to the second AP, and the first AP and the second AP both being APs associated by the AP collaborative work controller.

The roaming message notification unit is configured such that the AP collaborative work controller sends the roaming notification information to the first AP, such that the first AP sends STA association information corresponding to the STA to the second AP according to the indication information.

In the embodiment of the present application, the AP collaborative work controller further comprises a configuration unit which is configured to:
establish an association relationship with an AP;
the establishing an association relationship with an AP comprises:
   receiving a configuration information request message sent by an AP requesting an association;
   configuring a BSSID and a work channel corresponding to the AP requesting an association, wherein the AP collaborative work controller configures the AP requesting an association to have an identical BSSID with associated APs, and the AP collaborative work controller configures the AP requesting an association to have a work channel that does not overlap work channels of the associated APs; and
   sending configuration information to the AP requesting an association, the configuration information carrying the BSSID and the work channel corresponding to the configured AP.

In the embodiment of the present disclosure, the AP collaborative work controller further comprises a roaming decision unit which is configured to:
receive STA signal information sent by the first AP;
receive STA signal information about the STA sent by the second AP; and
learn, according to acquired STA signal information, a change in signal information between the STA and different APs, and determine whether the STA associated with the first AP needs to roam from the first AP to the second AP.

Based on the same or similar concept as that of the foregoing embodiments, an embodiment of the present disclosure further provides an access point (AP). The AP proposed in the present application comprises a roaming initiation unit, a roaming information transfer unit, and a roaming notification unit.

The roaming initiation unit is configured to receive roaming notification information sent by an AP collaborative work controller, the roaming notification information carrying indication information indicating that an STA roams from the current AP to a second AP.

The roaming information transfer unit is configured to send STA association information corresponding to the STA to the second AP according to the indication information that is carried in the roaming notification information and that indicates that the STA roams from the current AP to the second AP, after receiving the roaming notification information sent by the AP collaborative work controller.

The roaming notification unit is configured to: receive roaming confirmation information sent by the second AP, the roaming confirmation information being response information of the STA association information; and send a roaming notification message to the STA after receiving the roaming confirmation information sent by the second AP, the roaming notification message being used for notifying the STA to switch a work channel to a work channel corresponding to the second AP.

In the embodiment of the present disclosure, a signal detection unit is configured to send detected STA signal information to the AP collaborative work controller.

In the embodiment of the present disclosure, the AP further comprises a roaming response unit. The roaming response unit is configured to:
send roaming confirmation information to the third AP after receiving STA association information sent by a third AP; and send roaming success response information to the STA after an STA corresponding to the STA association information switches a work channel according to a roaming notification message sent by the third AP.

Based on the same or similar concept as the foregoing embodiments, an embodiment of the present disclosure further provides an access point (AP) collaborative work controller, comprising a memory, a processor, and a computer program stored on the memory and capable of running on the processor, wherein the computer program, when executed by the processor, implements a processing of any one of the AP collaborative work controller-based roaming methods provided in the embodiments of the present disclosure.

Based on the same or similar concept as the foregoing embodiments, an embodiment of the present disclosure further provides an access point (AP), comprising a memory, a processor, and a computer program stored on the memory and capable of running on the processor, wherein the computer program, when executed by the processor, implements a processing of any one of the AP-based roaming methods provided in the embodiments of the present disclosure.

Based on the same or similar concept as the foregoing embodiments, an embodiment of the present disclosure further provides a computer-readable storage medium storing thereon a computer program that when executed by a processor implements a processing of any one of the roaming methods described above.

## Claims

1. A roaming method comprising steps of:
configuring, by an access point AP collaborative work controller, roaming notification information when a wireless station STA associated with a first AP needs to roam from the first AP to a second AP, the roaming notification information carrying indication information indicating that the STA associated with the first AP roams from the first AP to the second AP, and the first AP and the second AP both being APs associated by the AP collaborative work controller; and
sending, by the AP collaborative work controller, the roaming notification information to the first AP, such that the first AP sends STA association information corresponding to the STA to the second AP according to the indication information.

2. The roaming method according to claim 1, before the step of configuring the roaming notification information, the method further comprises a step of:
establishing, by the AP collaborative work controller, an association relationship with APs, the APs including the first AP and the second AP, wherein:
the step of establishing an association relationship by the AP collaborative work controller with APs comprises steps of:
receiving, by the AP collaborative work controller, a configuration information request message sent by an AP requesting an association;
configuring, by the AP collaborative work controller, a basic service set identifier BSSID and a work channel corresponding to the AP requesting an association, wherein the AP collaborative work controller configures the BSSID corresponding to the AP requesting an association to be identical with BSSIDs of associated APs, and the AP collaborative work controller configures the work channel corresponding to the AP requesting an association not to overlap work channels corresponding to the associated APs; and
sending, by the AP collaborative work controller, configuration information to the AP requesting an association, the configuration information carrying the BSSID and the work channel corresponding to the configured AP.

3. The roaming method according to claim 2,
before the step of configuring the roaming notification information, the method further comprising steps of:
receiving, by the AP collaborative work controller, STA signal information sent by the first AP;
receiving, by the AP collaborative work controller, STA signal information about the STA;
learning, by the AP collaborative work controller, a change in signal information between the STA and different APs according to acquired STA signal information, and determining whether the STA associated with the first AP needs to roam from the first AP to the second AP.

4. A roaming method comprising steps of:
receiving roaming notification information sent by an access point AP collaborative work controller, the roaming notification information carrying indication information indicating that an STA roams from a current AP to a second AP;
sending STA association information corresponding to the STA to the second AP according to the indication information that is carried in the roaming notification information and that indicates that the STA roams from the current AP to the second AP;
receiving roaming confirmation information sent by the second AP, the roaming confirmation information being response information of the STA association information; and
sending, after receiving the roaming confirmation information sent by the second AP, a roaming notification message to the STA, the roaming notification message being used for notifying the STA to switch a work channel to a work channel corresponding to the second AP.

5. The roaming method according to claim 4, before the step of receiving the roaming notification information sent by the AP collaborative work controller, the method further comprises a step of:
sending detected STA signal information to the AP collaborative work controller.

6. The roaming method according to claim 4, further comprising steps of:
sending, after receiving STA association information sent by a third AP, roaming confirmation information to the third AP; and
sending, after an STA corresponding to the STA association information switches a work channel according to a roaming notification message sent by the third AP, roaming success response information to the STA.

7. An access point AP collaborative work controller, comprising a memory, a processor, and a computer program stored on the memory and capable of running on the processor, wherein the computer program, when executed by the processor, implements a processing of the method according to any one of claims 1 to 3.

8. An access point AP, comprising a memory, a processor, and a computer program stored on the memory and capable of running on the processor, wherein the computer program, when executed by the processor, implements a processing of the method according to any one of claims 4 to 6.

9. A computer-readable storage medium storing thereon a computer program that when executed by a processor implements a processing of the method according to any one of claims 1 to 6.
